# EUROPEAN PATENT APPLICATION

(11) **EP 2 479 099 A1**
(43) Date of publication of application: **25.07.2012**
(21) Application number: 11151881.7
(22) Date of filing: 24.01.2011
(51) Int. Cl.: B62M 6/65, B62M 6/90, B60K 7/00

(54) **Power output device for vehicle**

(71) Applicant: Huang, Lin Hsiang, Taipei 11642 (TW); Lin, Tung Ching, Banchiao City, Tapei 22044 (TW)
(72) Inventor: Huang, Lin Hsiang, Taipei 11642 (TW); Lin, Tung Ching, Banchiao City, Tapei 22044 (TW)
(74) Representative: Beck & Rössig European Patent Attorneys

(57) **Abstract**

A power output device includes a spindle (10) for attaching to a fork of a vehicle, a housing (15) for attaching to a wheel and rotatably attached onto the spindle (10), a container (30) disposed in the housing (15), a stator (34) disposed in container (30), a rotor (36) rotatably attached to the spindle (10), a gear (51) attached to the rotor, a gear wheel (52) secured to the container, a number of pinions engaged with the gear (51) and the gear wheel (52) and attached between two plates (56,57), an output shaft (58) attached to one of the plates (56,57) and attached to the container (30), and a control device (70) having one or more batteries (73) attached to the container (30), and an electric mechanism (74) for operating the rotor (36) and the gear (51) to rotate relative to the stator (34) and to rotate or drive wheel of the vehicle.

## Description

The invention relates to a power output device attached to a wheel of a vehicle for driving the wheel of the vehicle.

Typical power output devices for vehicles, such as unicycles, bicycles, tricycles, motor cycles, electric-powered cycles, etc. comprise a large battery and a number of parts or elements that may not be easily assembled to the vehicles by the users themselves.

The invention is to provide an alternative power output device for a vehicle for driving a wheel.

This technical problem is solved by a power output device as indicated in the claims.

Further, the invention provides a vehicle that is provided with at least one of such power output devices. Moreover, the invention provides a wheel that includes a power output device.
FIG. 1 is a perspective view of a vehicle employing a power output device;
FIGS. 2, 4, 6 are cross sectional views of the power output device for the vehicle;
FIGS. 3, 5 are partial exploded views of the power output device;
FIG. 7 is a partial perspective view of the power output device;
FIGS. 8, 9 are exploded views of the power output device; and
FIG. 10 is a partial cross sectional view of the power output device for driving the vehicle.

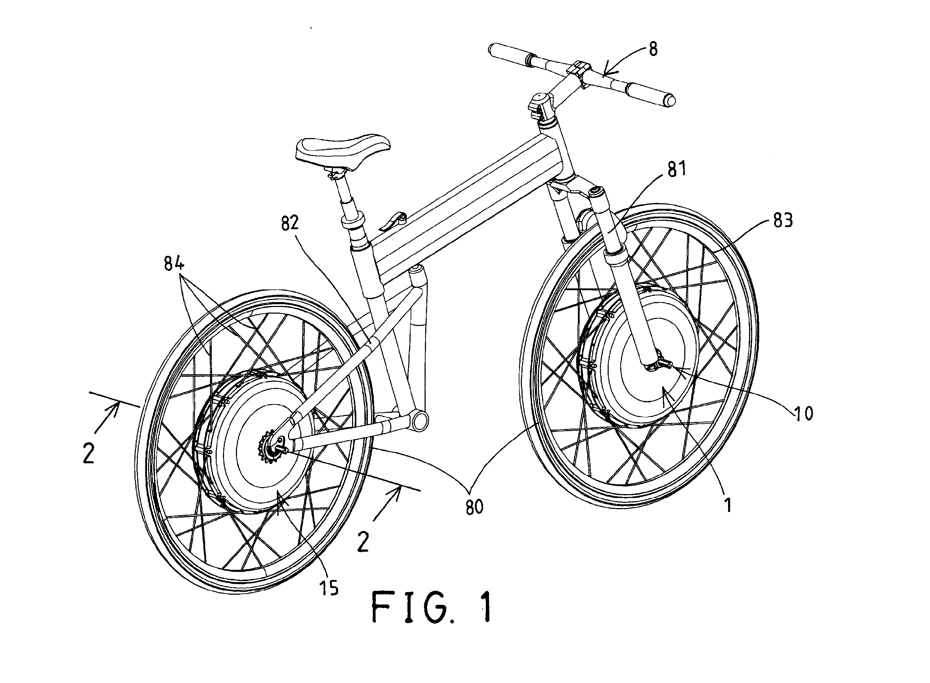

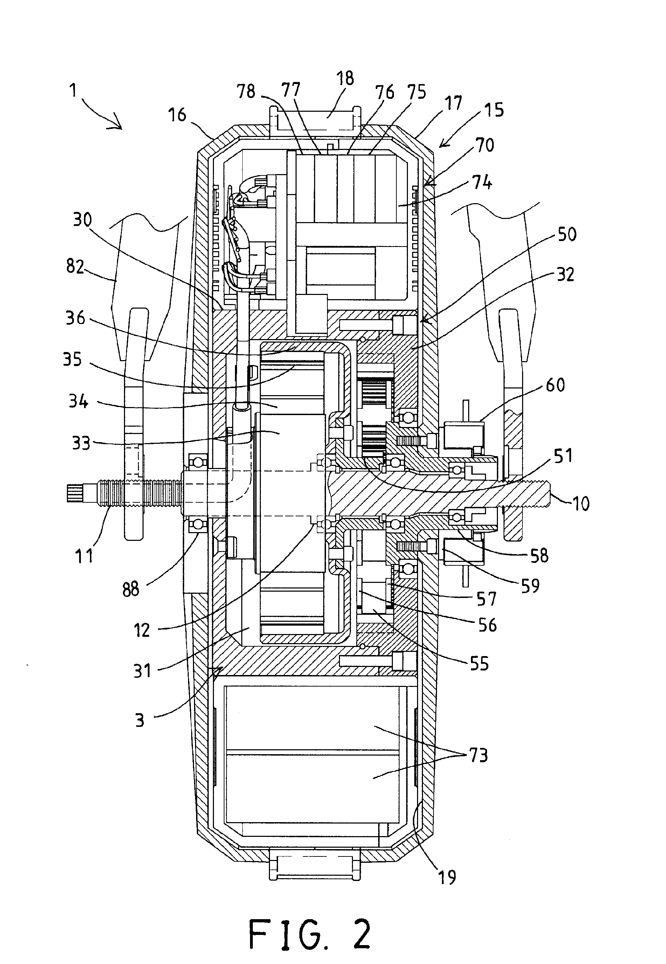

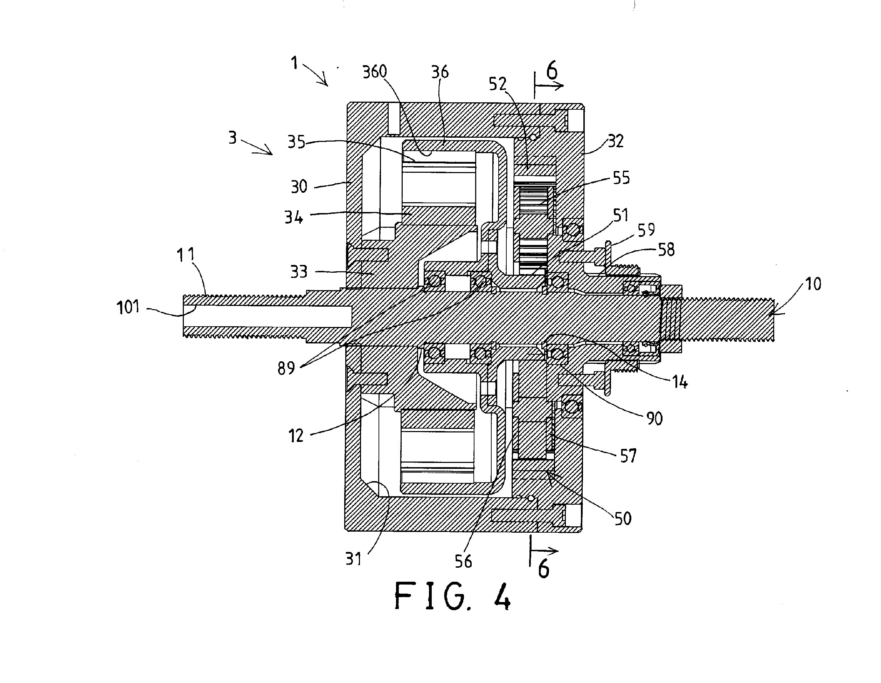

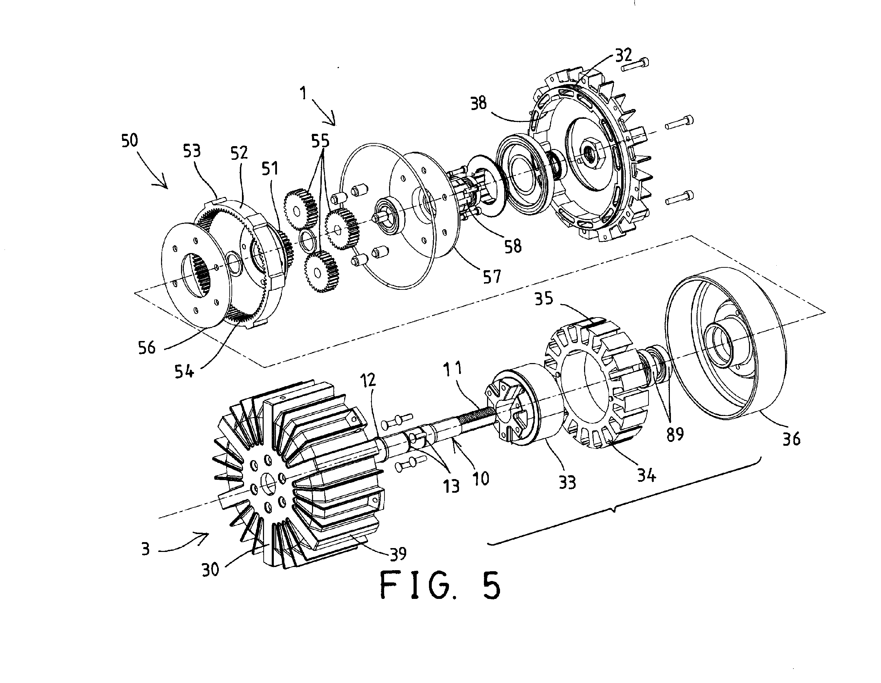

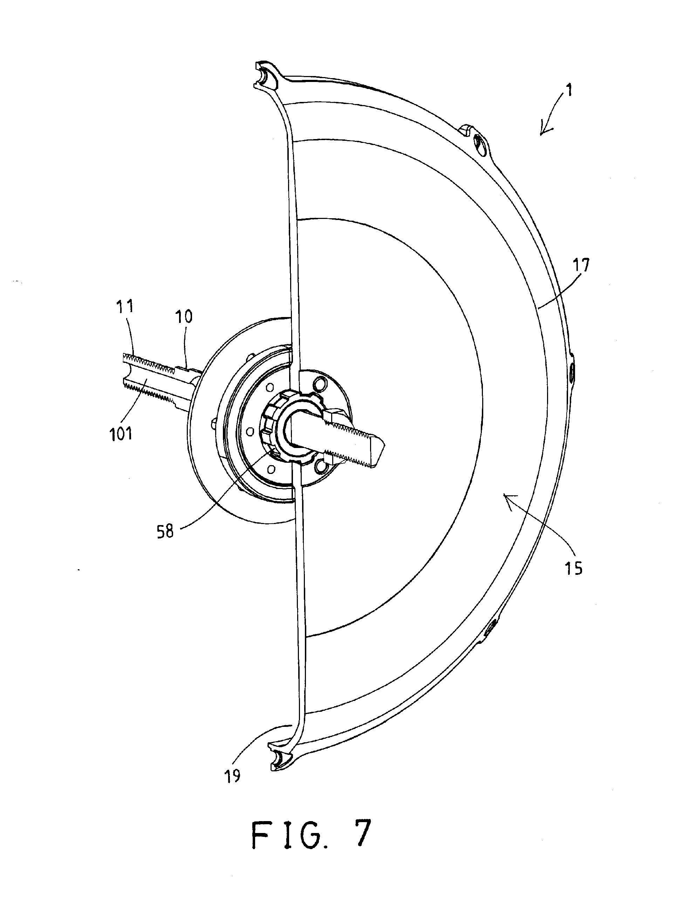

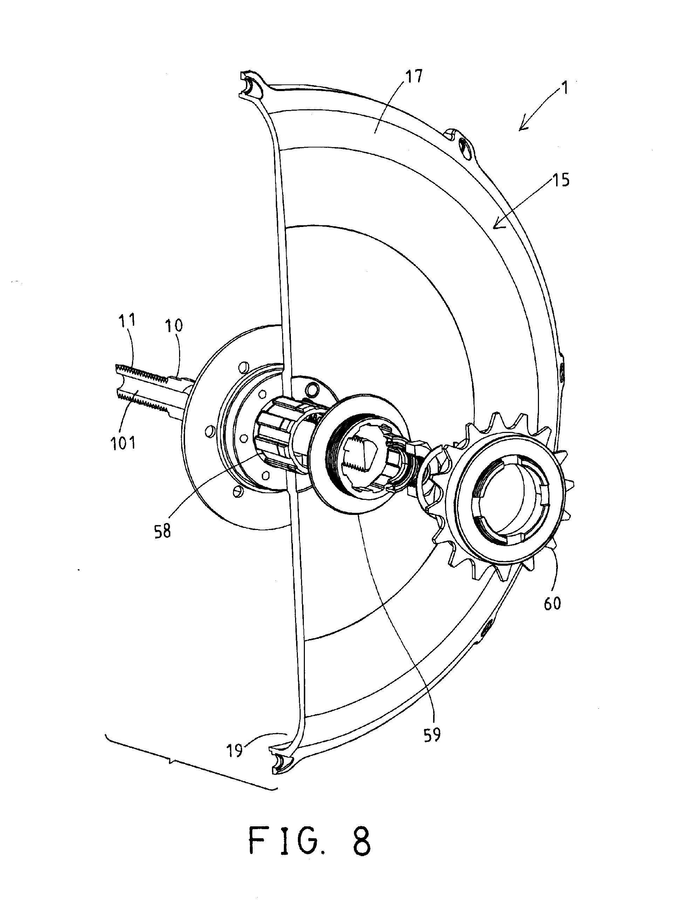

Referring to FIGS. 1-3 and 7-8, a power output device 1 is attached to either wheel 80 of a vehicle 8, such as unicycle, bicycle, tricycle, motorcycle, for attaching to either the front fork 81 or the rear fork mechanism 82, and for coupling and driving the wheel 80 to rotate relative to the fork mechanism 81, 82, in which the wheel 80 includes a wheel rim 83, and a number of spokes 84 for coupling the power output device 1 to the wheel rim 83. The power output device 1 comprises a spindle 10 including two threaded segments 11 for engaging with either the front or the rear fork mechanism 81, 82, the spindle 10 includes a peripheral flange 12 (FIGS. 2, 4-5), and a number of peripheral slots 13 (FIG. 5) for engaging with retaining rings 14 (FIG. 4) which may attach various parts or elements on the spindle 10.

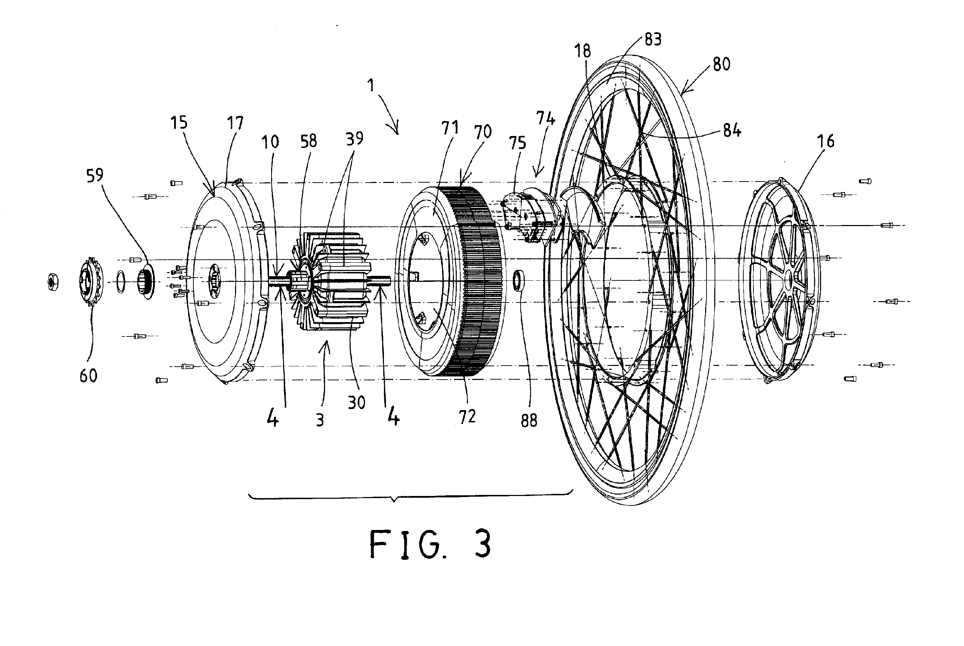

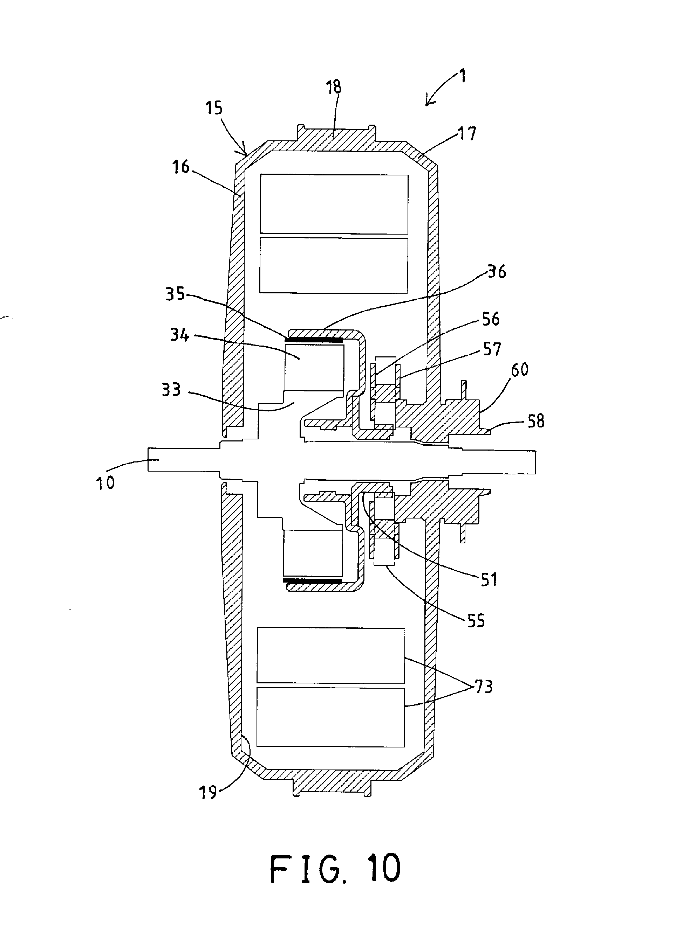

An outer housing 15 includes two housing members 16, 17 and a hub 18 secured together and attached to the spindle 10 with one or more bearings 88 (FIGS. 2, 3), the hub 18 is attached to the wheel rim 83 with the spokes 84 for allowing the hub 18 of the housing 15 and the wheel rim 83 of the wheel 80 to be rotated relative to the spindle 10 and the fork mechanism 81, 82. The housing 15 includes a chamber 19 (FIGS. 2, 10) for receiving a motor 3, and other parts or elements or batteries 73 (FIGS. 2, 10). The motor 3 includes a container 30 (FIGS. 2-5) disposed in the chamber 19 of the housing 15 and having a compartment 31, a cover 32 attached to the side of the container 30 for covering the compartment 31, a carrier 33 engaged in the compartment 31 of the container 30 and secured to the container 30, and a stator 34 engaged in the compartment 31 of the container 30 and/or secured to the carrier 33 for supporting one or more magnets 35 on or in the stator 34, the carrier 33 or the container 30 is engaged with the peripheral flange 12 of the spindle 10 (FIG. 4) and secured to the spindle 10 and will not be rotated relative to the spindle 10 and the fork mechanism 81, 82.

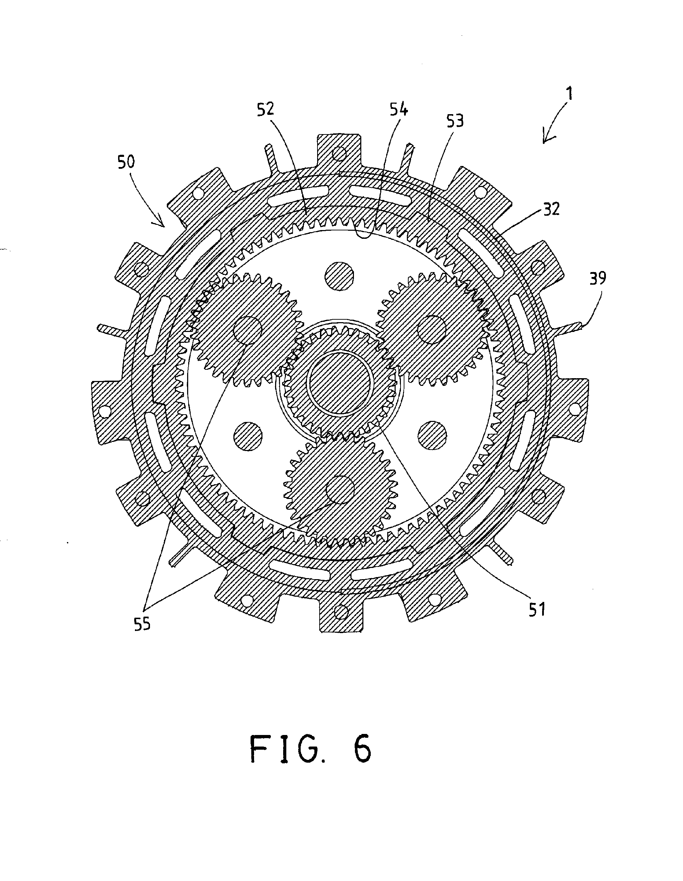

A rotor 36 is engaged in the compartment 31 of the container 30 and attached to the spindle 10 with one or more bearings 89 (FIGS. 4-5), and includes a space 360 (FIG. 4) for receiving the carrier 33 and/or the stator 34 and the magnets 35 and for allowing the rotor 36 to be rotated relative to the stator 34 and the magnets 35 in order to generate the electric power. The cover 32 of the container 30 may include one or more depressions 38 (FIG. 4), and the container 30 and/or the cover 32 may include a number of heat dissipating fins 39. A reduction gearing mechanism 50 includes a gear 51 attached to the rotor 36, a gear wheel 52 engaged in the cover 32 and having one or more projections 53 for engaging with the depressions 38 of the cover 32 and for preventing the gear wheel 52 from being rotated relative to the cover 32 and the container 30, the gear wheel 52 includes a number of teeth 54 for engaging with a number of (such as three) pinions 55 which are engaged with the gear 51 (FIG. 6).

Two pinions 55 are secured between the plates 56, 57 and to be rotated relative to the cover 32 and the container 30 by the rotor 36 and the gear 51. An output member or shaft 58 (FIGS. 2-3 and 8-9) is attached to the plates 56, 57 and/or the pinions 55 with one or more bearings 90 (FIG. 4), and attached to the container 30, and a sprocket wheel 60 is attached to the output shaft 58 directly or indirectly with a coupler 59 for allowing the sprocket wheel 60 and the output shaft 58 to be rotated relative to the cover 32 and the container 30 by the rotor 36 and the gear 51 and the pinions 55 of the gearing mechanism 50.

In operation, the carrier 33 and/or the stator 34 and the magnets 35 and the container 30 are secured to the spindle 10 (FIG. 10) and thus will not be rotated relative to the spindle 10 and the fork mechanism 81, 82, the rotor 36 and the gear 51 and the plates 56, 57 and the pinions 55 and the output shaft 58 and the sprocket wheel 60 are attached to the spindle 10, and the rotor 36 is rotatable relative to the stator 34 and the magnets 35 in order to generate the electric power; or when the power output device 1 is energized, the rotor 36 and the gear 51 may be caused to be rotated relative to the spindle 10 in order to drive the output shaft 58 and the sprocket wheel 60 through the pinions 55 and the gear 51 and the gear wheel 52, and so as to drive the housing 15 and the wheel rim 83 of the wheel 80 relative to the spindle 10 and the fork mechanism 81, 82.

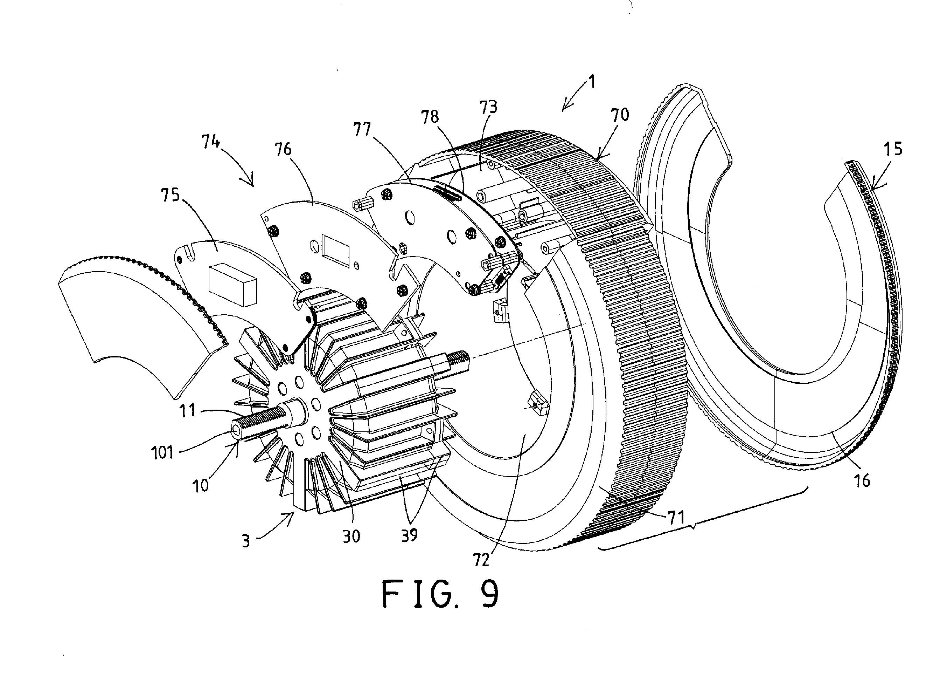

As shown in FIGS. 2-3 and 9-10, a control device 70 includes a casing 71 engaged in the housing 15 and secured to the container 30 and having an opening 72 (FIGS. 3, 9) for receiving the container 30, and having one or more batteries 73, an electric mechanism 74 (FIGS. 2, 9) is disposed in the casing 71, and may include a signal receiver 75, a sensor or detector 76, a torque detector 77, a navigating device 78 and/or the other electric parts or elements, such as Zigbee, radio frequency (RF), Bluetooth, subscriber identity module (SIM) card, etc., for detecting the road condition or the environment, such as the light, the temperature, the humidity, the pressure, the magnetic field, the torque, etc. and/or for controlling the rotor 36 of the motor 3.

For example, when the torque detector 77 detects that the torque applied to the output shaft 58 and the sprocket wheel 60 is not good enough, the electric mechanism 74 may control the batteries 73 to apply a greater electric power to drive the rotor 36 in a greater rotational speed relative to the stator 34 and the magnets 35 in order to generate a greater electric power and so as to apply a greater driving torque to the output shaft 58 and the sprocket wheel 60, and so as to drive the wheel 80 in a greater rotational speed. The housing 15 and the wheel 80 may be mounted on the spindle 10, and the container 30 and the control device 70 may also be supported on the spindle 10. The spindle 10 may further include a passage 101 for engaging with electric wires or cables.

In conclusion, the invention provides an alternative wheel drive mechanism that is adapted to be mounted on the wheel and supported by wheel carrier, e.g. a fork.

## Claims

1. A power output device (1) for attaching to a wheel and a fork mechanism of a vehicle, comprising a spindle (10) for attaching to the fork mechanism, a housing (15) for attaching to the wheel and including a chamber (19), the housing being rotatably attached to the spindle, **characterized in that**:
a motor (3) includes a container (30) disposed in the chamber of the housing and having a compartment, a cover (32) attached to a side portion of the container, a stator (34) disposed in the compartment of the container and secured to the container, a rotor (36) engaged in the compartment of the container and attached to the spindle, a gear (51) is attached to the rotor, a gear wheel (52) is secured to the cover and includes a plurality of teeth, a plurality of pinions (55) are engaged with the gear and the teeth of the gear wheel and rotatably attached between two plates, an output shaft (58) is attached to one of the plates and attached to the container, and a control device (70) includes at least one battery engaged in the housing and attached to the container, and includes an electric mechanism for operating the rotor of the motor.

2. The power output device as claimed in claim 1, wherein the cover (32) of the container includes a plurality of depressions, and the gear wheel (52) includes a plurality of projections for engaging with the depressions of the cover.

3. The power output device as claimed in claim 1 or 2, wherein the cover (32) and the container (30) includes a plurality of heat dissipating fins.

4. The power output device as claimed in one of claims 1 to 3, wherein the electric mechanism (74) includes a signal receiver, a sensor, a torque detector and a navigating device.

5. The power output device as claimed in one of claims 1 to 4, wherein the control device (70) includes a casing engaged in the housing and having an opening for receiving the container, and the battery is engaged in the casing.

6. The power output device as claimed in one of claims 1 to 5, wherein the motor (3) includes a carrier (33) disposed in the container and secured to the container, and the stator (34) is secured onto the carrier.

7. The power output device as claimed in one of claims 1 to 6, wherein the spindle (10) includes a peripheral flange (12) engaged with the container.

8. The power output device as claimed in one of claims 1 to 7 further comprising a sprocket wheel (60) attached to the output shaft (58).

9. The power output device as claimed in claim 8, wherein the sprocket wheel (60) is attached to the output shaft with a coupler (59).

10. Vehicle, comprising at least one wheel (80) and at least one wheel carrier, wherein the wheel is rotatably supported by the wheel carrier and a power output device (1) according to one of claims 1 to 9 is arranged between said wheel and said wheel carrier.

11. Vehicle wheel, comprising a power output device (1) according to one of claims 1 to 9.
